# EUROPÄISCHE PATENTSCHRIFT

(11) **EP 2 099 714 B1**
(45) Veröffentlichungstag und Bekanntmachung des Hinweises auf die Patenterteilung: **15.08.2012**
(21) Anmeldenummer: 07846598.6
(22) Anmeldetag: 15.11.2007
(51) Int. Cl.: B01J 23/02, C01F 7/00, C09C 1/40

(54) **KALZIUM-KARBONATO-HYDROXODIALUMINATE MIT HEXAGONAL-PLÄTTCHENFÖRMIGEN KRISTALLHABITUS**
CALCIUM CARBONATE HYDROXODIALUMINATES COMPRISING A HEXAGONAL PLATELET-SHAPED CRYSTAL HABIT
CALCIUM-CARBONATO-HYDROXODIALUMINATES À FACIÈS CRISTALLIN EN FORME DE PLAQUETTES HEXAGONALES

(30) Priorität: 21.11.2006 DE 102006055214
(43) Veröffentlichungstag der Anmeldung: 16.09.2009
(73) Patentinhaber: Nabaltec AG, 92421 Schwandorf (DE)
(72) Erfinder: SAUERWEIN, Reiner, 92449 Steinberg (DE); REIMER, Alfred, 93437 Fürth i. Wald (DE); EDENHARTER, Ludwig, 93133 Burglengenfeld (DE); SORGALLA, Manfred, 92421 Schwandorf (DE); WEHNER, Wolfgang, 64673 Zwingenberg (DE)
(74) Vertreter: Isenbruck, Günter
(86) Internationale Anmeldenummer: PCT/EP2007/009876
(87) Internationale Veröffentlichungsnummer: WO 2008/061664

(56) Entgegenhaltungen:
- DE-A1- 3 843 581
- M FRANCOIS, G RENAUDIN, O EVRARD: "A Cementitious Compound with Composition 3CaO.Al2O3.CaCO3.11H2O" ACTA CRYSTALLOGRAPHICA SECTION C, Bd. 54, Nr. 9, September 1998 (1998-09), Seiten 1214-1271, XP002473197 International Union of Crystallography, Great Britain in der Anmeldung erwähnt
- ORIAKHI C O ET AL: "Incorporation of poly(acrylic acid), poly(vinylsulfonate) and poly(styrenesulfonate) within layered double hydroxides" JOURNAL OF MATERIALS CHEMISTRY, Bd. 6, Nr. 1, Januar 1996 (1996-01), Seiten 103-107, XP000590710 THE ROYAL SOCIETY OF CHEMISTRY, CAMBRIDGE, GB ISSN: 0959-9428 in der Anmeldung erwähnt
- F LEROUX, J-P BESSE: "Polymer Interleaved Layered Double Hydroxide: A New Emerging Class of Nanocomposites" CHEMISTRY OF MATERIALS, Bd. 13, Nr. 10, Oktober 2001 (2001-10), Seiten 3507-3515, XP002473199 American Chemical Society, Washington, US in der Anmeldung erwähnt

## Beschreibung

Die vorliegende Erfindung betrifft Verfahren zur Herstellung von Kalzium-karbonato-hydroxodialuminaten mit hexagonal-plättchenförmigem Kristallhabitus, die so erhaltenen Aluminate in Zusammensetzungen und Stabilisatorsystemen sowie deren Verwendung.

Neue bleifreie PVC-Stabilisatoren benötigen als Stabilisatorkomponente für die Langzeitstabilisierung in PVC-Hart-Anwendungen Hydrotalzite.

In EP-A 930 332 wird für zinkfreie Systeme auch die Verwendung von Trikalziumhydroxo-dialuminat beschrieben. Kalzium-karbonato-hydroxodialuminate sind hierin nicht beschrieben.

In WO-A 93/25613 ist die Herstellung von Katoiten beschrieben. Karbonathaltige Verbindungen werden nicht erwähnt. Die Synthese von Katoiten, ausgehend von Kalziumhydroxid und Aluminiumhydroxid, ist auch in DE-OS 2 424 763 beschrieben. Hierin wird auch die flammhemmende Wirkung in Thermoplasten, insbesondere Polystyrol, HDPE, PVC, SBR und EVA belegt.

In WO-A 92/13914 werden Hydrokalumite als PVC-Stabilisatoren beansprucht. Karbonathaltige Homologe sind auch hier nicht genannt. Die Synthese erfolgt nach der Kopräzipitationsmethode, was zu zusätzlichen Salzballasten im Abwasser führt.

DE-A 1 952 6370 offenbart gemischte Erdalkali-Aluminium-Hydroxide als Säurefänger zur Verarbeitung von Thermoplasten. Bei der Herstellung müssen hier molare NaOH-Mengen über die Salzfracht entsorgt werden.

Tetrakalzium-monokarbonato-dodekahydroxo-dialuminat wurde erstmals von Turriziani & Schippa isoliert und charakterisiert [Ric. Sci. 26. 2792, (1956)]. Die Synthese ist aufwendig (Auslaugen von Zementpasten) und die Ausbeute gering (Herstellung von dünnen Filmen). In früheren Arbeiten wurden Tetrakalzium-tetradekahydroxo-dialuminate beschrieben, in denen später Karbonate (Hemi- oder Tetarakarbonate) nachgewiesen wurden, wobei die Karbonatbildung sehr wahrscheinlich mit dem Kohlendioxid aus der Luft erfolgte.

In JPCA Res. & Devel. Lab. (Portland Cement Assoc.) 4, 2 (1962) ist eine Bildungsweise von Ca₄Al₂(OH)₁₃(CO₃)_{0,5} · 8H₂O bei der Umsetzung von Ca₃Al₂O₆ mit Ca(OH)₂ in Wasser beschrieben, wobei das Produkt nach 6-monatiger Reaktionszeit durch eine Nebenreaktion mit dem CO₂ aus der Luft entsteht.

Acl. Cryst. C54, 1214 (1998) beschreibt Ca₄Al₂(OH)₁₂CO₃ ·5H₂O in einer Dreikomponenten-Feststoffsynthese ausgehend von Ca(OH)₂. Al(OH)₃ und CaCO₃ bei 120 °C und einen Druck von 2 kbar. Die Reaktionszeit beträgt 4 Wochen. In dieser Arbeit ist auch eine Röntgenstrukturanalyse enthalten.

Ein ähnliches Verfahren ist beschrieben in Cem. Conc. Res. 29, 63 (1999). Eine weitere Synthese ist publiziert in J. Res. NBS (National Bureau of Standards) 64A, 333 (1960): wobei Monokalziumaluminat - erhältlich durch mehrstündiges Brennen von Al(OH)₃ und CaCO₃ bei 1250°C - mit Ca(OH)₂ und Na₂CO₃ vermischt wird.

In jüngster Zeit wurde eine praktikabel durchführbare Methode zur Herstellung von Tetrakalzium-monokarbonato-dodekahydroxo-dialuminat-hydrat genannt: Kalziumnitrat wird mit Aluminiumnitrat in Gegenwart von Natronlauge und Soda in einem Schritt umgesetzt, wobei das resultierende Gel 24 Stunden bei 65 °C gealtert wird [J.Mater. Chem. 6 (1), 103 (1996) und Chem. Mater. 13, 3507 (2001)]. Dieses Kopräzipitationsverfahren ist jedoch nicht industriell anwendbar (teure Reaktanden) und wenig umweltfreundlich, da erhebliche Salzfrachten im Abwasser anfallen.

Alle diese Synthesemethoden haben keinerlei industrielle Bedeutung, da entweder Reaktionszeiten von mehreren Wochen, Temperaturen von über 1000 °C oder geringe Ausbeute vorliegen, so dass in der Mehrzahl nur von Bildungsweisen gesprochen werden kann.

Es besteht daher ein Bedarf an alternativen Verfahren zur Herstellung von Kalzium-karbonato-hydroxodialuminaten sowie an weiteren Verwendungsmögfichkeiten solcher Produkte.

Eine Aufgabe der vorliegenden Erfindung liegt somit darin, solche Verfahren und Aluminate sowie Verwendungen bereitzustellen.

Die Aufgabe wird gelöst durch ein Verfahren zur Herstellung von Kalzium-karbonato-hydroxodialuminaten mit hexagonal-plättchenförmigem Kristallhabitus der Formel (A):

CaₘAl₂(OH)₆₊₂₍ₘ₋₁₎An * nH₂O (A),

wobei m = 3,5 bis 4,5 und An = Karbonat, das teilweise durch Perchlorat und/oder Trifluormethansulfonat (Triflat) ersetzt sein kann, und n = 0 bis 6 ist, die Schritte enthaltend
(a) Umsetzung von Kalziumoxid oder Kalziumhydroxid, mit gegebenenfalls aktiviertem Aluminiumoxohydroxid oder Aluminiumhydroxid und gleichzeitig oder anschließend mit einer Karbonatquelle bestehend aus Kohlendioxid oder Alkali(bi)karbonat und
(b1) gegebenenfalls weitere Umsetzung des in Schritt (a) erhaltenen Produktes mit Perchlorsäure und/oder Trifluormethansulfonsäure oder
(b2) gegebenenfalls Kalzinieren des in Schritt (a) erhaltenen Produktes bei 200 °C bis 900 °C und anschließender Ionenaustausch in Gegenwart eines Perchlorat- und/oder Triflatsalzes, gegebenenfalls in Gegenwart von Alkali(bi)karbonat, in Wasser.

Bevorzugt ist, dass m = 3.8 bis 4,2, An = Karbonat, das gegebenenfalls teilweise durch Perchlorat ersetzt ist, und n = 0 bis 3 ist.

Weiterhin bevorzugt wird in Schritt (a) Alkali(bi)karbonat, vorzugsweise Natrium- oder Kaliumkarbonat, zugesetzt.

Darüber hinaus ist bevorzugt, dass in Schritt (a) die Karbonatquelle anschließend umgesetzt wird.

Die Umsetzung in Schritt (a) wird vorzugsweise bei Temperaturen von 25-180 °C drucklos oder unter einem Überdruck bis zu 12 bar durchgeführt.

Die Zugabe von Karbonat oder Kohlendioxid liefert hexagonale Kristalle, die sehr gut sedimentieren und einfach filtrierbar sind. Dieses Phänomen war überraschend, da beim Arbeiten in lnertgasatmosphäre und bei Verzicht auf Karbonat schleimige, schwer zu filtrierende Produkte entstehen. Die Verbindungen fallen als weiße Feststoffe an. Die Ausbeuten sind nahezu quantitativ.

Ein weiterer Vorteil dieses Verfahrens ist darin zu sehen, dass Verbindungen mit plättchen- beziehungsweise tafelförmigem Kristallhabitus erhalten werden und dadurch Gesundheitsrisiken am Arbeitsplatz (Atemwegserkrankungen, wie sie durch das Einatmen von nadelförmigen Kristallen verursacht sind) minimiert werden.

Weiterhin kann sich an das eigentliche erfindungsgemäße Verfahren zur Herstellung der Aluminate der Formel (A) ein weiterer Schritt (c) anschließen, enthaltend

(c) Nassvermahlen des in Schritt (a) oder gegebenenfalls in Schritt (b) erhaltenen Produktes, wobei eine Feststoffsuspension von 50 bis 700 g/l, bevorzugt 100 bis 500 g/l, besonders bevorzugt 150 bis 350 g/l und Mahlkörper von 0,2 bis 2,0 mm, bevorzugt 0,3 bis 1,0 mm, besonders bevorzugt 0,3 bis 0,6 mm verwendet werden und die mittlere Korngröße des gemahlenen Produktes < 10µm, bevorzugt < 7µm, besonders bevorzugt < 3µm, und ganz besonders bevorzugt < 1µm beträgt.

Ein weiterer Gegenstand der vorliegenden Anmeldung ist ein Verfahren zum Beschichten von Kalzium-karbonato-hydroxodialuminaten die Schritte enthaltend
(a) Herstellung von Kalzium-karbonato-hydroxodialuminaten gemäß dem erfindungsgemäßen Herstellverfahren und
(b) Beschichten des Produktes bei 50 bis 80 °C, wobei zum Beschichten 1 bis 10% Stearin- oder Palmitinsäure beziehungsweise deren Alkalisalze bezogen auf das zu beschichtende Produkt verwendet werden.

Ein weiterer Gegenstand der vorliegenden Erfindung betrifft eine Zusammensetzung enthaltend
mindestens ein Kalzium-karbonato-hydrokodialuminat erhältlich aus dem erfindungsgemäßen Verfahren zur Herstellung der Aluminate der Formel (A) und
Kalzium- und/oder Aluminiumhydroxid.

Die Zusammensetzung kann weiterhin ein synthetisches Polymer enthalten.

Hierbei ist vorteilhaft, dass das mindestens eine Kalzium-karbonato-hydroxodialuminat in einer Konzentration von 10 bis 70 Gew.-%, vorzugsweise 20-60 Gew.-%, bezogen auf das synthetische Polymer vorhanden ist.

Bei dem synthetischen Polymer kann es sich insbesondere um ein Thermoplast und/oder ein halogeniertes Polymer handeln.

Insbesondere bei halogenhaltigen Polymeren, bevorzugt PVC, verleihen Verbindungen der Formel **(A)** erhältlich aus dem erfindungsgemäßen Verfahren eine sehr gute thermische Stabilität, insbesondere bei hoher thermischer Beanspruchung (Verarbeitung). Dies ist überraschend, da mit Verbindungen der Formel **(A),** mit An = Karbonat, laut WO 92/13914 (karbonathaltige Hydrokalumite) keine erwünschte Stabilisatorwirkung erzielbar ist.

Die Verbindungen der Formel **(A)** können außerdem in anderen synthetischen Polymeren oder Copolymeren, wie HD (High Density)- und LD (Low Density)-Polyethylen (PE), Polypropylen (PP), Polybutylen (PB), Polyisobutylen (PIB), Polyester (PET), Polyamid (PA), Polyurethan (PUR), Polystyrol (PS) oder ABS (Acrylnitril-Butadien-StyrolCopolymer), SBR (Styrol-Butadien-Kautschuk), SAN (Styrol-Acrylnitril-Copolymer) und EVA (Ethylen-Vinylacetat-Copolymer) eingesetzt werden, wobei PS, SBR und EVA bevorzugt sind. Hierbei erfüllen sie die Funktion als Füllstoffe oder Flammschutzmittel/Rauchverminderer in hervorragender Weise. Die mechanischen Werte sind hier auch bei hohen Füllstoffgraden gut und der MFI-Wert (Schmelzflussindex) den Anforderungen der Technik entsprechend.

Weiterhin sind diese Verbindungen als Katalysatoren bei basisch katalysierten Reaktionen (z.B. Claisen-Kondensationen und Epoxidationen von Nitrilen sowie Umesterungen) als auch in Oxidationsreaktionen nach Bayer-Villiger zu verwenden. In aktivierter Form können sie als Träger für andere Katalysatoren fungieren, wie z.B. für Hydrierungen, Redoxreaktionen, Michael-Additionen, Epoxidation nach Weitz-Schaeffer und Zyanethylierungen.

Als Katalysatorvorstufen können kalzinierte (aktivierte) Analoga von Verbindungen der Formel **(A)** eingesetzt werden. Die Aktivierung kann durch Kalzinierung von Kalzium-karbonato-hydroxodialuminaten **(A)** bei Temperaturen von 200 bis 900 °C erfolgen, wobei Wasser oder Wasser und Kohlendioxid abgespalten wird.

Typische Repräsentanten von Kalzium-karbonato-hydroxodialuminaten der Formel **(A)** sind folgende:
1 . Ca₄Al₂(OH)₁₂CO₃ · nH2O;
2. Ca_{4,25}Al₂(OH)_{12,5}CO₃ * nH₂O;
3. Ca_{4,5}Al₂(OH)₁₃CO₃ * nH₂O;
4. Ca_{3,75}Al₂(OH)_{11,5}CO₃ * nH₂O;
5. Ca_{3,5}Al₂(OH)₁₁CO₃ * nH₂O;
6. Ca₄Al₂ (OH)₁₂ (CO₃)_{0,75}(OH)_{0.5} * nH₂O
7. Ca₄Al₂(OH)₁₂ (CO₃)_{0,5}(OH) * nH₂O;
8. Ca₄Al₂(OH)₁₂ (CO₃)_{0,25}(OH)1.5 * nH₂O;
9. Ca₄Al₂(OH)₁₂ (CO₃)_{0,75} (ClO₄)₀.₅ * nH₂O;
10. Ca₄Al₂(OH)₁₂ (CO₃)_{0,5}ClO₄ * nH₂O;
11. Ca₄ Al₂ (OH)₁₂ (CO₃)_{0,25}(ClO₄)_{1,5} * nH₂O
12. Ca₄ Al₂ (OH)₁₂ (CO₃)_{0,25}(triflat)_{1,5} * nH₂O
13. Ca₄ Al₂ (OH)₁₂(CO₃)_{0,75}(triflat)_{0,5} * nH₂O
14. Ca₄ Al₂ (OH)₁₂(CO₃)_{0,5}(triflat) * nH₂O
15. Ca₄ Al₂ (OH)₁₂(CO₃)_{0,5}(ClO₄)_{0,5}(triflat)_{0,5} * nH₂O

Hierbei hat n die oben angegebene Bedeutung.

Bevorzugt sind die Verbindungen 1, 6, 7, 8, 9, 10, 11, 12, 13, 14 und 15. Ganz besonders bevorzugt, sind dabei die Verbindungen 1, 6, 7, 9 und 13.

Ausgehend von den Rohstoffen Kalziumoxid oder Kalziumhydroxid sowie Aluminiumoxohydroxid oder Aluminiumhydroxid - auch in aktivierter Form - und Natrium(Kalium)-Karbonat oder -bikarbonat beziehungsweise Kohlendioxid, wobei Natrium- oder Kaliumkarbonat bevorzugt wird, und die Zugabe besonders bevorzugt später erfolgt, lassen sich die Kalzium-karbonato-hydroxodialuminate der Formel (A), mit An = Karbonat, insbesondere nach mehrstündigem Erhitzen bei intensivem Rühren (bis zu 1000 UpM) in wässriger Phase und nach Abtrennung durch Filtration als weiße Feststoffe in nahezu quantitiver Ausbeute gewinnen. Die Reaktion erfolgt bevorzugt drucklos bei 25 - 98 °C oder bei erhöhten Temperaturen von bis zu 180 °C und Drücken von bis zu 12 bar.

Kalziumoxid kann als Ätzkalk oder Branntkalk, Kalziumhydroxid u.a. als Löschkalk oder in wässriger Suspension als Kalkwasser oder Kalkmilch, Aluminiumoxohydroxid als Bauxit, Diaspor oder Böhmit, Aluminiumhydroxid u.a. als Gibbsit, Hydrargillit oder Bayerit zum Einsatz kommen.

Perchlorat- oder Triflat-Salze werden durch Umsetzung der Verbindungen gemäß Formel (A) mit wässriger verdünnter Perchlorsäure oder Trifluormethansulfonsäure bei Raumtemperatur erhalten. In einer Alternativsynthese kann auch von kalzinierten (aktivierten) Verbindungen der Formel **(A)** mit An = Karbonat ausgegangen werden. Hierbei erfolgt nach Aktivierung eine Beladung via Anionenautausch mit wässrigen Salz-, insbesondere Alkaliperchlorat- oder -triflatlösungen, wobei Alkali(bi)karbonat zugegen sein kann.

Adsorbate von Natriumperchlorat oder Natriumtriflat sind zugänglich durch Versprühen oder Verrühren von entsprechenden wässrigen Salzlösungen auf/mit aktivierte(n) oder nichtaktivierte(n) Verbindungen der Formel **(A).**

Bevorzugt werden Produkte mit sehr feiner und enger Korngrößenverteilung. Die Korngrößenverteilung der Produkte kann in einem nachgeschalteten Schritt mittels Rührwerkskugelmühlen eingestellt werden. Dieser Schritt erfolgt bevorzugt an der Reaktionssuspension bei Feststoffkonzentrationen von 50-700 g/l, wobei Mahlkörper von 0,2-2 mm Größe verwendet werden können und die mittlere Korngröße des Mahlgutes <10µ beträgt.

Insbesondere werden beschichtete Produkte bevorzugt. Das Coating mit Stearin- oder Palmitinsäure beziehungsweise deren Alkalisalzen wird bei 50 bis 80 °C durchgeführt. Dieser Schritt erfolgt vor der Filtration, also während des Verfahrens oder nach der Trocknung, also nach dem Verfahren, durch Zugabe der Fettsäuren beziehungsweise ihrer Alkalisalze, wobei deren Menge zwischen 1 bis 10 % bezogen auf das zu coatende Produkt beträgt. Dieser Schritt kann auch in einem Henschel-Mischer vollzogen werden.

Kalzium-karbonato-hydroxodialuminate der Formel **(A)** können als Thermostabilisatoren insbesondere für PVC in Einsatzmengen von 0,1 bis 10 phr zur Verwendung kommen. Bevorzugt sind 0,5 bis 5,0 phr, besonders bevorzugt 1,0 bis 3,0 phr.

Ein weiterer Gegenstand der vorliegenden Erfindung ist somit ein Stabilisatorsystem für synthetische Polymere enthaltend mindestes ein Kalzium-karbonato-hydroxodialuminat erhältlich aus dem erfindungsgemäßen Verfahren zu deren Herstellung.

Vorzugsweise sind die Verbindungen der Formel (A) in Einsatzmengen von 0,1 bis 10 phr, bevorzugt von 0,5 bis 5,0 phr und besonders bevorzugt von 1,3 bis 3,0 phr enthalten.

Ein bevorzugtes Stabilisatorsystem enthält mindestens eine der folgenden Substanzen: Kalziumhydroxid, eine Zinkseife, ein Ca/Zn-Stabilisator, ein 1,3-Diketon - auch als dessen Ca-, Mg-, Zn- oder Al-Salz -, ein Polyol (z.B. Maltit, Laktit, Palatinit, Pentaerythrit (PE), Bis-PE, Trimethylolpropan (TMP), Bis-TMP oder Tris-hydroxyethyl-isozyanurat

(THEIC)), ein Phosphorigsäureester, eine Glycidylverbindung, ein epoxidierter Fettsäureester, ein Alkali-, Erdalkali- beziehungsweise Zinkperchlorat/-triflat, auch gelöst in Wasser oder in einem organischen Solvens, ein Aminourazil, Dihydropyridin, Aminokrotonsäureester, ein Zyanazetylhamstoff oder ein Perchloratsalz.

Nachfolgend werden diese sowie weitere Zusatzstoffe, die in den erfindungsgemäßen Stabilisatorsystemen enthalten sein können beschrieben.

Zur Thermostabilisierung insbesondere von PVC können zusätzlich folgende Verbindungen beziehungsweise Verbindungsklassen zugegen sein:
- Metallhydroxide oder -seifen (Metall: Mg, Ca, Zn und Al)
- Hydrotalzite, Dawsonite und Zeolithe
- Beta-diketone oder Beta-ketoester
- Aminourazile und -thiourazile
- Glyzidylverbindungen,
- Polyole (z.B. Maltit, Lactit, Palatinit, Pentaerythrit, Dipentaerythrit oder THEIC)
- Phosphorigsäureester,
- Alkali-, Erdalkali- oder Zinkperchlorate (beziehungsweise -triflate), auch gelöst in Wasser oder einem organischen Solvens (z.B. BDG (Butyldiglykol), PEG (Polyethylen glykol) oder ein Polyol).

Nähere Ausführungen zu den Verbindungen und Verbindungsklassen (Definitionen und Mengenangaben) können EP 1 669 397 entnommen werden.

Weiterhin können folgende Additive optionsweise zugegeben werden:
- Füllstoffe
- Gleitmittel
- Weichmacher
- Pigmente
- Epoxidierte Fettsäureester
- Antioxidantien
- UV-Absorber und Lichtschutzmittel
- Treibmittel

Detaillierte Angaben hierzu sind in EP 1 669 397 enthalten.

Zusätzliche Additive sind optische Aufheller, Antistatika, Biozide, Verarbeitungshilfen, Antifoggingagentien, Gelierhilfen, Schlagzähmodifikatoren, Metalidesaktivatoren, Flammschutzmittel und Rauchverminderer sowie Kompatibilisatoren. Beschreibungen hierzu finden sich in ,Plastics Additives Handbook", Edited by Dr. Hans Zweifel, Carl Hanser Verlag, 5. Ausgabe, 2000 und in "Handbook of Polyvinyl Chloride Formulating" E.J. Wickson, J. Wiley & Sons, 1993.

Beispiele für die zu stabilisierenden chlorhaltigen Polymere sind Polymere des Vinylchlorids, Vinylidenchlorids, Vinylharze enthaltend Vinylchlorideinheiten in deren Struktur, wie Copolymere des Vinylchlorids und Vinylester von aliphatischen Säuren, insbesondere Vinylazetat, Copolymere des Vinylchlorids mit Estern der Acryl- und Methacrylsäure und mit Acrylnitril, Copolymere des Vinylchlorids mit Dienverbindungen und ungesättigten Dikarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Krotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchlorazetates und Dichlordivinylethers; chlorierte Polymere des Vinylazetates, chlorierte polymere Ester der Acrylsäure und der alpha-substituierten Acrylsäure; Polymere von chlorierten Styrolen, zum Beispiel Dichlorstyrol; Chlorkautschuke; chloriene Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate des Vinylchlorids mit polymerisierbaren Verbindungen wie Acrylnitril, Vinylazetat oder ABS zu verstehen, wobei es sich um Suspensions-, Masse- oder Emulsionspolymerisate handeln kann.

Bevorzugt ist ein PVC-Homopolymer, auch in Kombination mit Polyacrylaten oder Polymethacrylaten.

Ferner kommen auch Pfropfpolymerisate von PVC mit EVA, ABS und MBS in Betracht, ebenso Pfropfpolymerisate von PVC mit PMMA (Polymethylmethacrylat). Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS (Methylmethacrylat-Butadien-Styrol-Copolymer), NBR (Acrylnitril-Butadien-Kautschuk), SAN, EVA, CPE

(chloriertes PE), PMA (Polymethylacrylat), PMMA, EPDM (Ethylen-Propylen-Dien-Elastomer) und Polyiaktonen, insbesondere aus der Gruppe ABS, NBR, NAR (Acrylnitril-Acrylat-Copolymer), SAN und EVA. Die verwandten Abkürzungen für die Copolymerisate sind dem Fachmann geläufig und bedeuten folgendes: ABS (Acrylnitril-Butadien-Styrol); SAN (Styrol-Acrylnitril); NBR (Acrylnitril-Butadien); NAR (Acrylnitril-Acrylat); EVA (Ethylen-Vinylazetat). Es kommen insbesondere auch Styrol-Acrylnitril-Copolymerisate auf Acrylat-Basis (ASA) in Betracht.

Bevorzugt als Komponente sind in diesem Zusammenhang Polvmerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen aus (i) 100 Gewichtsteilen PVC und (ii) 0 bis 300 Gewichtsteilen ABS und/oder mit SAN modifiziertes ABS und 0 bis 80 Gewichtsteilen der Copolymeren NBR, NAR und/oder EVA, insbesondere jedoch EVA.

Weiterhin kommen zur Stabilisierung im Rahmen dieser Erfindung auch insbesondere Rezyklate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Rezyklat. Ein weiterer Einsatz der erfindungsgemäßen Stabilisatorkombinationen beruht darin, dass dem Fertigartikel aus Hart- oder Weich-PVC antistatische Eigenschaften verliehen werden können. Auf diese Weise ist es möglich, den Einsatz teurer Antistatika zu reduzieren. Bevorzugt für diese Anwendung ist Weich-PVC oder PVC-Halbhart. Besonders bevorzugt sind Weich-PVC beziehungsweise PVC-Halbhart.

Die erfindungsgemäße Stabilisierung eignet sich sowohl für chlorhaltige Polymerzusammensetzungen, die nicht weichgemachte beziehungsweise weichmacherfreie oder im Wesentlichen weichmacherfreie Zusammensetzungen darstellen, als auch für weichgemachte Zusammensetzungen. Besonderes bevorzugt sind Anwendungen in Hart-PVC beziehungsweise PVC-Halbhart.

Die erfindungsgemäßen Zusammensetzungen eignen sich insbesondere, in Form von Han-Rezepturen, für Hohlkörper (Flaschen), Verpackungsfolien (Tiefziehfolien), Blasfolien, "Crash Pad"-Follen (Automobile), Rohre, Schaumstoffe, Schwerprofile (Fensterrahmen), Lichtwandprofile. Bauprofile, Folien (auch hergestellt nach dem Luvithermverfahren), Profile, Sidings, Fittings, Bürofolien und Apparaturgehäuse, Isolatoren, Computer und Bestandteile von Haushaltsgeräten sowie für Elektronikanwendungen insbesondere im Halbleiterbereich. Ganz besonders geeignet sind diese zur Herstellung von Fensterprofilen mit hohem Weißgrad und Oberflächenglanz.

Bevorzugte andere Zusammensetzungen in Form von Halbhart- und Weich-Rezepturen sind für Drahtummantelungen, Kabelisolierungen, Dekorationsfolien. Dachfolien, Schaumstoffe, Agrarfolien, Schläuche, Dichtungsprofile, Fußböden, Tapeten, KFZ-Teile, Weich-Folien, Spritzgussteile, Bürofolien und Folien für Traglufthallen geeignet. Beispiele für die Anwendung der erfindungsgemäßen Zusammensetzungen als Plastisole sind Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Folien hergestellt nach dem Luvithermverfahren. Näheres hierzu siehe "KUNSTSTOFFHANDBUCH PVC", Band 2/2, W. Becker/H. Braun, 2. Aufl. 1985, Carl Hanser Verlag, S. 1236-1277.

Ein weiterer Gegenstand der vorliegenden Erfindung ist ein Kalzium-karbonato-hydroxodialuminat erhältlich nach dem erfindungsgemäßen Verfahren zu dessen Herstellung, wobei m = 3,8 bis 4,2, An = Karbonat und n = 0 bis 3 ist.

Diese Kalzium-karbonato-hydroxodialuminate sowie die erfindungsgemäßen Zusammensetzungen können als Katalysator(vorstufe), zur Enzymimmobilisierung, als Füllstoffe, Flammhemmer oder Rauchverminderer für HDPE, PET, PS, SBR, SAN oder EVA verwendet werden.

### Beispiele

### Beispiel 1: Herstellung von Tetrakalzium-monokarbonato-dodekahydroxo-dialuminat-Hydrat

In einem Reaktionskessel (5 m³) werden 296 kg (4 kmol) Kalziumhydroxid (Nekablanc^{®}0 ex KFN) in 3to VE-Wasser suspendiert. Die Suspension wird unter Rühren auf 90 °C aufgeheizt.

Bei einer Rührgeschwindigkeit von 900 rpm werden 156 kg (2 kmol) Aluminiumhydroxid (Apyral^{®} 40CD ex NABALTEC) über eine Aufgabeachnecke rasch zugegeben. Anschließend fügt man im Verlauf von einer Stunde eine Lösung von 106 kg (1 kmol) Soda in 1 to VE-Wasser hinzu und belässt eine weitere Stunde unter Rühren bei 90 °C. Nun wird die abgekühlte Suspension über eine Filterpresse filtriert und mit VE-Wasser annähernd neutral gewaschen und der Filterkuchen in einem Mahltrockner getrocknet. Das feinkristalline weiße Pulver weist einen hexagonal-plättchenförmigem Kristallhabitus auf und wird in einer Ausbeute von ca. 98 % (506 kg) erhalten. Es weist folgende Analysenwerte auf:

| | | | |
|---|---|---|---|
| CaO_{ger.}: 41,8% | Al₂0_{3gef.}: 19,3% | CO_{2 gef.}: 9,3% | H₂O_{gef.}: 29,6 % |
| CaO_{ber.}: 42,4% | Al₂O_{3ber.}:19,8% | CO_{2ber}.: 8,5% | H₂O_{ber}.:29,3% |

| | | | |
|---|---|---|---|
| (H₂O-Gehalt aus der Differenz errechnet) | | | |

| | |
|---|---|
| Dies entspricht der Brutto-Formel: | 3,9CaO*Al₂O₃*CO₂* 8,4H₂O (MG = 516,2) |
| beziehungsweise | Ca_{3,9}Al₂(OH)_{11,8}CO₃ · 2,5H₂O |

Aus der XRD Analyse ergibt sich, dass die Ausgangsmaterialien Ca(OH)₂ (Portlandit) und Al(OH)₃ (Gibbsit) in nur geringen Mengen von < 5% vorhanden sind.

Die Gitterparameter sind: 20 = 11,8° (Basalreflex) und d = 7,5Å (Netzebenenabstand)

### Beispiel 2 bis 4: Anwendungstechnische Prüfung des erfinderischen Produktes PM1 i.Vgl. mit den Handelsprodukten PM2, und PM3

Eine Substanzprobe aus Beispiel 1 (PM1, Beispiel 2) wird i. Vgl. zu HYSAFE 549 (handelsüblicher Hydrotalcit der Fa. M.J.HUBER Corp. - PM2, Beispiel 3) und ZEOLON P4A (handelsüblicher Na-Zeolith A der Fa. MAL RT- PM3, Beispiel 4) einem dynamischen Hitzetest (DWT) bei 180 °C unterworfen. Der Test wird an einem COLLIN-Walzwerk W 110E durchgeführt (Walzendurchmesser: 110 mm, 10 UpM, Friktion: -10 %).

Die Mischungen waren wie folgt zusammengesetzt (Tab. 1).

**Tab. 1: Zusammensetzung der Mischungen**

| Komponenten (Gew.-Tle.) | Beispiel 2 | Beispiel 3 | Beispiel 4 |
|---|---|---|---|
| PVC (K-Wert 70)¹⁾ | 100 | 100 | 100 |
| DOP | 50 | 50 | 50 |
| POLCARB 50SV²⁾ | 50 | 50 | 50 |
| Ca/Zn-Stabilisator³⁾ | 1,43 | 1,43 | 1,43 |
| PM1 | 2,57 | -- | -- |
| PM2 | -- | 2,57 | -- |
| PM3 | -- | -- | 2,57 |

| | | | |
|---|---|---|---|
| ¹⁾ = VINNOLIT S4170, Fa. VINNOLIT GmbH; ²) = Kreide, Fa. IMERYS-Gruppe; ³⁾ = CZ-Stabilisator ohne Langzeitkomponente | | | |

Die Mischungen werden auf dem Walzwerk bei 180 °C 5 Minuten homogenisiert. Anschließend wird bei 180 °C weitergewalzt und Prüfkörper (d = 0,3mm, 25x38mm) in 5-Minuten-lntervallen entnommen und deren Vergilbung (Y1-Wert) mit einem Farbmessgerät der Fa. BYK GARDNER (Spectro Guide Sphere Gloss) nach ASTM D1925 bestimmt.

Die YI-Werte der einzelnen Prüfkörper sind nachfolgender Tab. 2 zu entnehmen (es gilt: je niedriger der YI-Wert, desto besser die Wirksamkeit).

**Tab. 2: YI-Werte der Prüfkörper**

| Minuten | Beispiel 2 | Beispiel 3 | Beispiel 4 |
|---|---|---|---|
| 5 | 31,0 | 36,6 | 35,0 |
| 10 | 37,6 | 39,8 | 40,7 |
| 15 | 40,4 | 48,0 | 46,4 |
| 20 | 44,4 | 50,7 | 48,6 |
| 25 | 45,2 | 54,7 | 52,3 |
| 30 | 46,3 | 57,4 | 54,8 |
| 35 | 47,3 | 59,2 | 56,8 |
| 40 | 48,1 | 61,6 | 58,3 |
| 45 | 49,2 | 63,5 | 61,2 |
| 50 | 50,3 | 64,8 | 62,7 |
| 55 | 50,9 | 65,4 | 65,7 |
| 60 | 52,0 | 67,7 | 66,7 |
| 65 | 54,2 | 69,1 | 69,9 |
| 70 | 56,4 | 68,2 | 71,9 |
| 75 | 57,3 | 72,3 | 74,9 |
| 80 | 59,9 | 71,4 | 76,0 |
| 85 | 62,8 | 72,6 | 79,3 |
| 90 | 63,2 | 73,7 | 79,8 |

Wie ersichtlich, ist das erfindungsgemäße Beispiel 2 dem nächstliegenden Stand der Technik (SdT) - Beispiele 3 und 4 - in Anfangsfarbe (AF) und Farbhaltung (FH) deutlich überlegen.

### Beispiel 5 bis 7: Rezepturmodifikationen von PM-1 (siehe Tab. 3)

**Tab 3: Diverse Rezepturzusammensetzungen**

| Komponenten (Gew.-Tle.) | Beispiel 5 | Beispiel 6 | Beispiel 7 |
|---|---|---|---|
| PVC ¹⁾ (K-Wert 70) | 100 | 100 | 100 |
| DOP | 50 | 50 | 50 |
| POLCARB 50SV ²⁾ | 50 | 50 | 50 |
| Ca/Zn-Stabilisator ³⁾ | 1,43 | -- | -- |
| PM1 | 2,57 | 2,57 | 2,57 |
| ESBO ⁴⁾ | 3,0 | -- | 3,0 |
| Zn-freier Stabilisator ⁵⁾ | -- | 1,43 | 1,43 |

| | | | |
|---|---|---|---|
| ¹⁾ = VINNOLIT S4170, Fa. VINNOLIT GmbH; ²⁾ = Kreide, Fa.IMERYS-GRUPPE; ³⁾ = CZ-Stabilisator ohne Langzeitkomponente; ⁴⁾ = LANKROFLEX E2307, Fa. AKROS; ⁵⁾ = Aminourazil-basiert | | | |

Die Homogenisierung der Mischungen und deren Testung erfolgt analog den voranstehenden Beispielen. Die YI-Werte sind nachfolgender Tab. 4 zu entnehmen.

**Tab. 4: Yi-Werte der Prüfkörper**

| Minuten | Beispiel 5 | Beispiel 6 | Beispiel 7 |
|---|---|---|---|
| 5 | 35.5 | 32,2 | 30,0 |
| 10 | 38,1 | 32,5 | 31,0 |
| 15 | 39.5 | 32,9 | 31,2 |
| 20 | 40,5 | 33,8 | 32,2 |
| 25 | 41,2 | 34,3 | 33,0 |
| 30 | 41,9 | 35,5 | 33,5 |
| 35 | 42,7 | 36,4 | 34,4 |
| 40 | 43,8 | 37,7 | 36,0 |
| 45 | 45,0 | 390 | 37.2 |
| 50 | 46,0 | 40.0 | 38,4 |
| 55 | 46,8 | 42,0 | 39,4 |
| 60 | 48,0 | 44,0 | 40,2 |
| 65 | 48,9 | 46,0 | 41.5 |
| 70 | 50,1 | 49,0 | 43,0 |
| 75 | 51,0 | 49,5 | 44,1 |
| 80 | 52,1 | 51,6 | 45,8 |
| 85 | 52,8 | 54,5 | 47,2 |
| 90 | 53,7 | 58,3 | 48,0 |

Ein Vergleich von Beispiel 2 mit Beispiel 6 zeigt, dass eine Alternativstabilisierung auf Aminourazil-Basis eine signifikante Verbesserung in AF und FH aufweist (40 beziehungsweise 18 % bei YI:37,7(37,6 und YI: 49,2/49,0). Ebenso zeigt eine Gegenüberstellung der Beispiele 6 und 7 bei ESBO-Zusatz eine deutliche Steigerung.

**Tab. 5: DHC-Werte der Prüfkörper**

| Leitfähigkeit [µS/cm] | Beispiel 5 [Minuten] | Beispiel 6 [Minuten] | Beispiel 7 [Minuten] |
|---|---|---|---|
| t₁₀ | 62 | 77 | 88 |
| t₅₀ | 96 | 135 | 149 |
| t₂₀₀ | 179 | 233 | 313 |

Ein Vergleich von Beispiel 2 mit Beispiel 5 zeigt, dass ESBO-Zusatz eine Performancesteigerung von 18 beziehungsweise 17 % ergibt (YI: 45,2/45,0 und YI: 48,1/48,0).

In der DHC (t₁₀-, t₅₀- und t₂₀₀-Werte nach DIN 53 581-Verfahren B: Leitfähigkeitsmessung¹) - siehe Tab. 5 - ist bei Substitution des Zn-Stabilisators auf eine organisch basierte Stabilisierung eine deutliche Verbesserung erkennbar (Steigerung der t₁₀-, t₅₀- und t₂₀₀-Werte auf 41 %, 55% und 75%).
¹ siehe. WO 2006/013040, S. 64, 65 - Verwendung v. PVC-Walzfellprohen anstelle von PVC-Pulverproben

### Beispiel 9: Versuche zur Wasserlagerung von Prüfkörpern

### 1. Herstellung der Kompounds:

1000 g Kompound nach Beispiel 2. 3 und 4 im Henschel-Mischer (ca. 15 Min., 110 °C, 2500 UpM).

### 2. Herstellung der Pressplatten:

Kneter (PolyLab System, Fa. ThermoElectronCorp.: Antrieb: Rheocord 300p. Kneter: Rheomix 3000p, 180 bis 185 °C, 40 rpm, 12 bis 15 Min.); Presse (Polystat 300S. Fa. Schwabenthan: 12min.. 175 °C, 100kp/cm²), Plattendimension: 180x250x3 mm.

Durchführung der Wasserlagerung: Die Pressplatten werden in Anlehnung an ISO 62:1999 3 Wochen in dest. Wasser (500ml, 23 °C) gelagert. (siehe Tab. 6)

**Tab. 6: Wasseraufnahme der einzelnen Prüfkörper [Gew.-%]:**

| | 1 Tag | 2 Tag | 3 Tag | 7 Tag | 14 Tag | 21 Tag |
|---|---|---|---|---|---|---|
| Beispiel 2 ^{a)} | 0,074 | 0,104 | 0,134 | 0,224 | 0,313 | 0,373 |
| Beispiel 3 | 0.098 | 0,131 | 0,164 | 0,279 | 0,378 | 0,460 |
| Beispiel 4 | 0,097 | 0,130 | 0,163 | 0,260 | 0,358 | 0,439 |

| | | | | | | |
|---|---|---|---|---|---|---|
| ^{a)} = gecoated mit 2,5% Stearinsäure im Anschluss an die Synthese | | | | | | |

Die Zahlenwerte ergeben eine Zunahme der Wasseraufnahme von Beispiel 2 über Beispiel 4 und Beispiel 3, d. h. es liegt mit den erfindungsgemäßen Verbindungen eine Verbesserung gegenüber dem SdT vor.

## Patentansprüche

1. Verfahren zur Herstellung von Kalzium-karbonato-hydroxodialuminaten mit hexagonal-plättchenformigem Kristallhabitus der Formel (A):
CaₘAl₂(0H)₆₊₂(ₘ₋₁)An · nHO₂ (A),
wobei m = 3,5 bis 4,5 und An = Karbonat, das teilweise durch Perchlorat und/oder Trifluormethansulfonat (Triflat) ersetzt sein kann und n = 0 bis 6 ist, die Schritte enthaltend
(a) Umsetzung von Kalziumoxid oder Kalziumhydroxid, mit gegebenenfalls aktiviertem Aluminiumoxohydroxid oder Aluminiumhydroxid und gleichzeitig oder anschließend mit einer Karbonatquelle bestehend aus Kohlendioxid oder Alkali(bi)karbonat und
(b1) gegebenenfalls weitere Umsetzung des in Schritt (a) erhaltenen Produktes mit Perchlorsäure und/oder Trifluormethansulfonsäure oder
(b2) gegebenenfalls Kalzinieren des in Schritt (a) erhaltenen Produktes bei 200 °C bis 900 °C und anschließender Ionenaustausch in Gegenwart eines Perchlorat- und/oder Triflatsalzes, gegebenenfalls in Gegenwart von Alkali(bi)karbonat, in Wasser.

2. Verfahren nach Anspruch 1, **dadurch gekennzeichnet, dass** m = 3,8 bis 4,2, An = Karbonat, das gegebenenfalls teilweise durch Perchlorat ersetzt ist, und n = 0 bis 3 ist.

3. Verfahren nach Anspruch 1 oder 2, **dadurch gekennzeichnet, dass** in Schritt (a) Alkali(bi)karbonat, vorzugsweise Natrium- oder Kaliumkarbonat, zugesetzt wird.

4. Verfahren nach einem der Ansprüche 1 bis 3, **dadurch gekennzeichnet, dass** in Schritt (a) die Karbonatquelle anschließend umgesetzt wird.

5. Verfahren nach einem der Ansprüche 1 bis 4, **dadurch gekennzeichnet, dass** die Umsetzung in Schritt (a) bei Temperaturen von 25 - 180 °C drucklos oder unter einem Überdruck bis zu 12 bar durchgeführt wird.

6. Verfahren nach einem der Ansprüche 1 bis 5, den weiteren Schritt enthaltend (c) Nassvermahlen des in Schritt (a) oder gegebenenfalls in Schritt (b) erhaltenen Produktes, wobei eine Feststoffsuspension von 50 bis 700 g/l und Mahlkörper von 0,2 bis 2,0 mm eingesetzt werden und die mittlere Korngröße des gemahlenen Produktes < 10µm beträgt.

7. Verfahren zum Beschichten von Kalzium-karbonato-hydroxodialuminaten die Schritte enthaltend
(a) Herstellung von Kalzium-karbonato-hydroxodialuminaten gemäß einem der Ansprüche 1 bis 6 und
(b) Beschichten des Produktes bei 50 bis 80 °C, wobei zum Beschichten 1 bis 10 % Stearin- oder Palmitinsäure beziehungsweise deren Alkalisalze bezogen auf das zu beschichtende Produkt verwendet werden.

8. Zusammensetzung enthaltend
- mindestens ein Kalzium-karbonato-hydroxodialuminat erhältlich aus dem Verfahren nach einem der Ansprüche 1 bis 7 und
- Kalzium- und/oder Aluminiumhydroxid.

9. Zusammensetzung nach Anspruch 8, weiterhin enthaltend ein synthetisches Polymer.

10. Zusammensetzung nach Anspruch 9, **dadurch gekennzeichnet, dass** das mindestens eine Kalzium-karbonato-hydroxodialuminat in einer Konzentration von 10 bis 70 Gew.-% bezogen auf das synthetische Polymer vorhanden ist.

11. Zusammensetzung nach Anspruch 9 oder 10, **dadurch gekennzeichnet dass** das synthetische Polymer ein Thermoplast und/oder ein halogeniertes Polymer ist.

12. Stabilisatorsystem für synthetische Polymere enthaltend mindestes ein Kalzium-karbonato-hydroxodialuminat erhältlich aus dem Verfahren nach einem der Ansprüche 1 bis 7.

13. Stabilisatorsystem nach Anspruch 12, **dadurch gekennzeichnet, dass** die Verbindungen der Formel (A) in Einsatzmengen von 0,1 bis 10 phr, bevorzugt von 0,5 bis 5,0 phr und besonders bevorzugt von 1,3 bis 3,0 phr zur Verwendung kommen.

14. Stabilisatorsystem nach Anspruch 12 oder 13, **dadurch gekennzeichnet, dass** zusätzlich mindestens eine der folgenden Substanzen enthalten ist: Kalziumhydroxid, eine Zinkseife, ein Ca/Zn-Stabilisator, ein 1,3-Diketon - auch als dessen Ca-, Mg-, Zn- oder Al-Salz -, ein Polyol (z.B. Maltit, Laktit, Palatinit, Pentaerythrit (PE), Bis-PE, Trimethylolpropan (TMP), Bis-TMP oder Tris-hydroxyethyl-isozyanurat (THEIC)), ein Phosphorigsäureester, eine Glycidylverbindung, eine epoxidierter Fettsäureester, ein Alkali-, Erdalkalibeziehungsweise Zinkperchlorat/-triflat, auch gelöst in Wasser oder in einem organischen Solvens, ein Aminourazil, Dihydropyridin, Aminokrotonsäureester, ein Zyanazetylharnstoff oder ein Perchloratsalz.

15. Kalzium-karbonato-hydroxodialuminat erhältlich nach dem Verfahren nach einem der Ansprüche 1 bis 7, **dadurch gekennzeichnet, dass** m = 3,8 bis 4,2, An = Karbonat und n = 0 bis 3 ist.

16. Verwendung eines Kalzium-karbonato-hydroxodialuminats nach Anspruch 15 oder einer Zusammensetzung nach Anspruch 8 als Katalysator(vorstufe), zur Enzymimmobilisierung, als Füllstoffe, Flammhemmer oder Rauchverminderer für HDPE, PET, PS, SBR, SAN oder EVA.

## Claims

1. A process for preparing calcium carbonate hydroxodialuminates which have a hexagonal platelet-shaped crystal habit and are of the formula (A):
CaₘAl₂(OH)₆₊₂₍ₘ₋₁₎An · nH₂O (A)
where m = 3.5 to 4.5 and An = carbonate which may be partly replaced by perchlorate and/or trifluoromethanesulfonate (triflate) and n = 0 to 6, comprising the steps of
(a) reacting calcium oxide or calcium hydroxide with optionally activated aluminum oxohydroxide or aluminum hydroxide and simultaneously or subsequently with a carbonate source consisting of carbon dioxide or alkali metal (bi)carbonate and
(b1) optionally further reacting the product obtained in step (a) with perchloric acid and/or trifluoromethanesulfonic acid or
(b2) optionally calcining the product obtained in step (a) at 200°C to 900°C and subsequently exchanging ions in the presence of a perchlorate and/or triflate salt, optionally in the presence of alkali metal (bi)carbonate, in water.

2. The process as claimed in claim 1, **characterized in that** m = 3.8 to 4.2, An = carbonate which is optionally partly replaced by perchlorate and n = 0 to 3.

3. The process as claimed in claim 1 or 2, **characterized in that** alkali metal (bi)carbonate, preferably sodium or potassium carbonate, is added in step (a).

4. The process as claimed in one of claims 1 to 3, **characterized in that** the carbonate source is subsequently converted in step (a).

5. The process as claimed in one of claims 1 to 4, **characterized in that** the reaction in step (a) is performed at temperatures of 25-180°C at ambient pressure or under an elevated pressure of up to 12 bar.

6. The process as claimed in one of claims 1 to 5, comprising the further step of (c) wet grinding the product obtained in step (a) or optionally in step (b), using a solids suspension of 50 to 700 g/l and grinding bodies of 0.2 to 2.0 mm, and the mean particle size of the ground product being < 10 µm.

7. A process for coating calcium carbonate hydroxodialuminates, comprising the steps of
(a) preparing calcium carbonate hydroxodialuminates as per one of claims 1 to 6 and
(b) coating the product at 50 to 80°C, using, for the coating, 1 to 10% stearic or palmitic acid or alkali metal salts thereof based on the product to be coated.

8. A composition comprising
- at least one calcium carbonate hydroxodialuminate obtainable from the process as claimed in one of claims 1 to 7 and
- calcium hydroxide and/or aluminum hydroxide.

9. The composition as claimed in claim 8, further comprising a synthetic polymer.

10. The composition as claimed in claim 9, **characterized in that** the at least one calcium carbonate hydroxodialuminate is present in a concentration of 10 to 70% by weight based on the synthetic polymer.

11. The composition as claimed in claim 9 or 10, **characterized in that** the synthetic polymer is a thermoplastic and/or a halogenated polymer.

12. A stabilizer system for synthetic polymers comprising at least one calcium carbonate hydroxodialuminate obtainable from the process as claimed in one of claims 1 to 7.

13. The stabilizer system as claimed in claim 12, **characterized in that** the compounds of the formula (A) are used in amounts of 0.1 to 10 phr, preferably of 0.5 to 5.0 phr and more preferably of 1.3 to 3.0 phr.

14. The stabilizer system as claimed in claim 12 or 13, **characterized in that** at least one of the following substances is additionally present: calcium hydroxide, a zinc soap, a Ca/Zn stabilizer, a 1,3-diketone - or else as the Ca, Mg, Zn or Al salt thereof -, a polyol (e.g. maltitol, lactitol, palatinitol, pentaerythritol (PE), bis-PE, trimethylolpropane (TMP), bis-TMP or tris(hydroxyethyl) isocyanurate (THEIC)), a phosphorous ester, a glycidyl compound, an epoxidized fatty acid ester, an alkali metal perchlorate/triflate, alkaline earth metal perchlorate/triflate or zinc perchlorate/triflate, undissolved or dissolved in water or in an organic solvent, an aminouracil, dihydropyridine, aminocrotonic ester, a cyanoacetylurea or a perchlorate salt.

15. A calcium carbonate hydroxodialuminate obtained by the process as claimed in one of claims 1 to 7, **characterized in that** m = 3.8 to 4.2, An = carbonate and n = 0 to 3.

16. The use of a calcium carbonate hydroxodialuminate as claimed in claim 15 or of a composition as claimed in claim 8 as a catalyst (precursor), for enzyme immobilization, as fillers, flame retardants or smoke suppressants for HDPE, PET, PS, SBR, SAN or EVA.

## Revendications

1. Procédé de fabrication de carbonato-hydroxodialuminates de calcium à faciès cristallin en forme de plaquettes hexagonales de formule (A) :
CaₘAl₂(OH)₆₊₂₍ₘ₋₁₎An·nH₂O (A)
dans laquelle m = 3,5 à 4,5 et An = carbonate, qui peut être remplacé en partie par perchlorate et/ou trifluorométhanesulfonate (triflate), et n = 0 à 6, comprenant les étapes suivantes :
(a) la mise en réaction d'oxyde de calcium ou d'hydroxyde de calcium avec de l'oxohydroxyde d'aluminium ou de l'hydroxyde d'aluminium éventuellement activé, et simultanément ou ultérieurement avec une source de carbonate constituée de dioxyde de carbone ou de (bi)carbonate alcalin, et
(b1) éventuellement la mise en réaction supplémentaire du produit obtenu à l'étape (a) avec de l'acide perchlorique et/ou de l'acide trifluorométhanesulfonique, ou
(b2) éventuellement la calcination du produit obtenu à l'étape (a) à une température de 200 °C à 900 °C, puis l'échange d'ions en présence d'un sel de perchlorate et/ou de triflate, éventuellement en présence d'un (bi)carbonate alcalin, dans de l'eau.

2. Procédé selon la revendication 1, **caractérisé en ce que** m = 3,8 à 4,2, An = carbonate, qui est éventuellement remplacé en partie par perchlorate, et n = 0 à 3.

3. Procédé selon la revendication 1 ou 2, **caractérisé en ce qu'**un (bi)carbonate alcalin, de préférence le carbonate de sodium ou de potassium, est ajouté à l'étape (a).

4. Procédé selon l'une quelconque des revendications 1 à 3, **caractérisé en ce que** la source de carbone est mise en réaction ultérieurement à l'étape (a).

5. Procédé selon l'une quelconque des revendications 1 à 4, **caractérisé en ce que** la réaction à l'étape (a) est réalisée à des températures de 25 à 180 °C à la pression atmosphérique ou sous une surpression de jusqu'à 12 bar.

6. Procédé selon l'une quelconque des revendications 1 à 5, comprenant l'étape supplémentaire suivante :
(c) le broyage humide du produit obtenu à l'étape (a) ou éventuellement à l'étape (b), une suspension de solides de 50 à 700 g/l et un corps de broyage de 0,2 à 2,0 mm étant utilisés et la taille de grain moyenne du produit broyé étant < 10 µm.

7. Procédé de revêtement de carbonato-hydroxodialuminates de calcium, comprenant les étapes suivantes :
(a) la fabrication de carbonato-hydroxodialuminates de calcium selon l'une quelconque des revendications 1 à 6, et
(b) le revêtement du produit à une température de 50 à 80 °C, 1 à 10 % d'acide stéarique ou palmitique ou leurs sels alcalins étant utilisés pour le revêtement par rapport au produit à revêtir.

8. Composition contenant :
- au moins un carbonato-hydroxodialuminate de calcium pouvant être obtenu par le procédé selon l'une quelconque des revendications 1 à 7, et
- de l'hydroxyde de calcium et/ou d'aluminium.

9. Composition selon la revendication 8, contenant également un polymère synthétique.

10. Composition selon la revendication 9, **caractérisée en ce que** le ou les carbonato-hydroxodialuminates de calcium sont présents en une concentration de 10 à 70 % en poids par rapport au polymère synthétique.

11. Composition selon la revendication 9 ou 10, **caractérisée en ce que** le polymère synthétique est un thermoplastique et/ou un polymère halogéné.

12. Système de stabilisation pour polymères synthétiques contenant au moins un carbonato-hydroxodialuminate de calcium qui peut être obtenu par le procédé selon l'une quelconque des revendications 1 à 7.

13. Système de stabilisation selon la revendication 12, **caractérisé en ce que** les composés de formule (A) sont utilisés en quantités de 0,1 à 10 phr, de préférence de 0,5 à 5,0 phr et de manière particulièrement préférée de 1,3 à 3,0 phr.

14. Système de stabilisation selon la revendication 12 ou 13, **caractérisé en ce qu'**au moins une des substances suivantes est également contenue : hydroxyde de calcium, un savon de zinc, un stabilisateur Ca/Zn, une 1,3-dicétone, également sous la forme de son sel de Ca, Mg, Zn ou Al, un polyol (p. ex. maltitol, lactitol, palatinite, pentaérythrite (PE), bis-PE, triméthylolpropane (TMP), bis-TMP ou trishydroxyéthyl-isocyanurate (THEIC)), un ester de l'acide phosphoreux, un composé de glycidyle, un ester d'acide gras époxydé, un perchlorate/triflate alcalin, alcalinoterreux ou de zinc, également dissous dans de l'eau ou dans un solvant organique, un aminouracile, une dihydropyridine, un ester de l'acide aminocrotonique, une cyanacétylurée ou un sel de perchlorate.

15. Carbonato-hydroxodialuminate de calcium pouvant être obtenu par le procédé selon l'une quelconque des revendications 1 à 7, **caractérisé en ce que** m = 3,8 à 4,2, An = carbonate et n = 0 à 3.

16. Utilisation d'un carbonato-hydroxodialuminate de calcium selon la revendication 15 ou d'une composition selon la revendication 8 en tant que (précurseur de) catalyseur, pour l'immobilisation d'enzymes, en tant que charges, agents ignifuges ou réducteurs de fumée pour HDPE, PET, PS, SBR, SAN ou EVA.
